# EUROPÄISCHE PATENTANMELDUNG

(11) **EP 3 434 911 A1**
(43) Veröffentlichungstag der Anmeldung: **30.01.2019**
(21) Anmeldenummer: 18174810.4
(22) Anmeldetag: 29.05.2018
(51) Int. Cl.: F15B 15/14, F15B 15/28, F16F 9/32, F16J 10/02

(54) **KOLBENZYLINDERSYSTEM MIT MINDESTENS EINEM ROHRELEMENT**

(30) Priorität: 24.07.2017 DE 102017116615
(71) Anmelder: Benteler Steel/Tube GmbH, 33104 Paderborn (DE)
(72) Erfinder: Brabander, Helwig, 33154 Salzkotten (DE)
(74) Vertreter: Müller & Schubert

(57) **Zusammenfassung**

Die vorliegende Erfindung betrifft ein Kolbenzylindersystem für ein Arbeitsgerät, wobei das Kolbenzylindersystem (1) mindestens ein Rohrelement (11) und mindestens einen in dem mindestens einen Rohrelement (11) geführten Kolben (10) umfasst. Das Kolbenzylindersystem (1) ist dadurch gekennzeichnet, dass das mindestens eine Rohrelement (11) aus einem Hochmanganstahl besteht und die Innenseite des mindestens einen Rohrelementes (11) spanend bearbeitet ist.

## Beschreibung

Die vorliegende Erfindung betrifft ein Kolbenzylindersystem mit mindestens einem Rohrelement.

Heutzutage werden geschweißte oder nahtlos-kaltgezogene Rohre zur Herstellung von Zylindermantelrohren eingesetzt. Diese Rohre bestehen in der Regel aus Baustählen.

Die Bestimmung der Position des Kolbens im Zylinder kann mechanisch erfolgen, beispielsweise über ein Seilzugsystem. Alternativ sind magnetinduktive Systeme zur Positionsbestimmung bekannt. Hierbei werden Signale ausgetauscht zwischen einem am Kolben befestigten Magneten und einem Sensor auf der Zylinderaußenseite. Ein solches magnetinduktives System ist beispielsweise in der US 9,062,694 B2 beschrieben. Hierbei wird insbesondere ein ferromagnetisches Material, insbesondere ein Stahl, als Material für den Zylinder verwendet.

Bei solchen magnetinduktiven Messsystemen besteht eine hohe Messungenauigkeit und Messunsicherheit. Diese Nachteile beruhen darauf, dass ein Restmagnetismus, das heißt Remanenz, in dem Zylinderrohr nicht ausgeschlossen werden kann. Zudem muss das Zylinderrohr eine große Wanddicke aufweisen, um den Umgebungsbedingungen, insbesondere einem hohen Innendruck beim Betrieb des Kolbenzylindersystems, standhalten zu können. Durch diese große Wanddicke wird die Erfassung der Position des Magneten im Inneren des Zylinderrohres durch einen außen angebrachten Sensor erschwert beziehungsweise ist nicht möglich.

Aufgabe der vorliegenden Erfindung ist es daher ein Kolbenzylindersystem bereitzustellen, bei dem ein magnetinduktives Messsystem mit hoher Messgenauigkeit eingesetzt werden kann und das zudem auch bei geringem Gewicht mechanischen Belastungen gut standhalten kann.

Der Erfindung liegt die Erkenntnis zugrunde, dass diese Aufgabe gelöst werden kann, in dem Manganstahl, insbesondere ein Hochmanganstahl zumindest als Material für das Rohrelement des Kolbenzylindersystems verwendet wird und dieses geeigneten Bearbeitungsschritten unterworfen wird.

Die Aufgabe wird daher erfindungsgemäß gelöst durch ein Kolbenzylindersystem, wobei das Kolbenzylindersystem mindestens ein Rohrelement und mindestens einen in dem mindestens einen Rohrelement geführten Kolben umfasst. Das Kolbenzylindersystem ist dadurch gekennzeichnet, dass das mindestens eine Rohrelement aus einem Hochmanganstahl besteht und die Innenseite des mindestens einen Rohrelementes spanend bearbeitet ist.

Als Kolbenzylindersystem wird erfindungsgemäß ein System bezeichnet, in dem ein Kolben in einem Rohrelement oder mehreren Rohrelementen geführt ist. Das Kolbenzylindersystem kann als aktives Element oder passives Element ausgestaltet sein. Beispielsweise kann das Kolbenzylindersystem ein Antriebskolbenzylindersystem oder ein Dämpfungssystem sein. Das Kolbenzylindersystem dient insbesondere für ein Arbeitsgerät. Das Arbeitsgerät kann hierbei eine Baumaschine oder Landmaschine sein. Alternativ kann als Arbeitsgerät auch ein Nutzfahrzeug bezeichnet werden. Das Kolbenzylindersystem kann auch als Aktuator bezeichnet werden und stellt insbesondere einen linear geführten Aktuator dar.

Das Rohrelement kann auch als Zylinderrohr oder Präzisionsrohr bezeichnet werden. Das Rohrelement wird aus einem Rohr hergestellt, insbesondere von einem entsprechend behandelten Rohr abgelängt und gegebenenfalls weiteren Bearbeitungsschritten unterworfen.

Erfindungsgemäß besteht das Rohrelement aus einem Hochmanganstahl. Unter Hochmanganstahl wird insbesondere ein Stahl verstanden, der einen Mangangehalt von mindestens 10 Gew.-% Mangan aufweist. Besonders bevorzugt weist der Hochmanganstahl einen Mangangehalt von mindestens 14 Gew.-% auf. Bei diesem Mangangehalt stellt sich zuverlässig ein austenitisches Gefüge ein. Zudem kann eine gute Kaltzähigkeit durch einen Mangangehalt von mindestens 14 Gew.-% gewährleistet werden. Der Mangangehalt kann beispielsweise bis zu 40 Gew.-% betragen. Ein höherer Mangangehalt würde dazu führen, dass der Stahl seine Fließfähigkeit verliert und die Stahlherstellbarkeit erschwert wird.

Weiterhin ist die Innenseite des mindestens einen Rohrelementes spanend bearbeitet. Durch spanende Bearbeitung kann die Einstellung gewünschter Oberflächeneigenschaften zuverlässig erfolgen.

Indem erfindungsgemäß ein Hochmanganstahl verwendet wird, kann die Magnetisierbarkeit des Rohres minimiert werden. Hierdurch können bei einer magnetinduktiven Messung hohe Messgenauigkeiten erzielt werden. Erstaunlicher Weise hat sich gezeigt, dass sich ein Rohrelement aus Hochmangan herstellen lässt und dieses auch spanend bearbeitet werden kann. Insbesondere ist bei der vorliegenden Erfindung die Innenseite des Rohrelementes spanend bearbeitet. Da dies die Fläche ist, an der der in dem Rohrelement geführte Kolben entlang gleitet, ist die spanende Bearbeitung der Oberfläche vorteilhaft. Durch diese kann insbesondere gezielt eine geringe Oberflächenrauigkeit eingestellt werden und auch vorgegebenen Toleranzen können eingehalten werden.

Gemäß einer Ausführungsform besteht das Rohrelement aus einem kaltgezogenen, nahtlosen Rohr oder einem geschweißten und kaltgezogenen Rohr. Es hat sich erstaunlicher Weise gezeigt, dass aus einem Hochmanganstahl ein Warmrohr durch Umwalzen erzeugt werden kann und dieses anschließend in mindestens einem Kaltziehschritt zu einem Rohr umgeformt werden kann. Insbesondere bei einem nahtlosen Rohr ist hierbei von Vorteil, dass die Beaufschlagung des aus dem Rohr hergestellten Rohrelement mit Druck, beispielsweise bei einer Anwendung als Rohrelement eines Hydraulik- oder Pneumatiksystems, nicht zu einer Beschädigung des Rohrelementes, insbesondere zu einer Verformung führt. Auch die Verwendung eines geschweißten Rohres kann erfindungsgemäß erfolgen. Hierbei hat sich erstaunlicher Weise gezeigt, dass ein Rollumformen und insbesondere anschließendes Schweißen des Rohres, das aus Hochmanganstahl besteht, möglich ist und dieses nach einer Kaltumformung als Rohrelement für ein Kolbenzylindersystem verwendet werden kann.

Gemäß einer bevorzugten Ausführungsform weist das mindestens eine Rohrelement einen Rauheitswert (Ra) an der Innenseite auf, der <= 0,4µm, vorzugsweise <= 0,3 und besonders bevorzugt <= 0,2µm beträgt. Die Rauheit, die auch als Rauigkeit bezeichnet werden kann, ist für Präzisionsrohre bisher mit einer Oberflächenrauigkeit von 0,4µm für die Außenseite und Innenseite angegeben. Mit der vorliegenden Erfindung wird die Rauigkeit an der Innenseite aber weiter minimiert und so die geringen Rauigkeitswerte eingestellt. Hierdurch kann die Betätigung des Kolbens, das heißt das Bewegen des Kolbens in dem Rohrelement mit möglichst geringem Reibungswiderstand erfolgen und das Betreiben des Kolbenzylindersystems wird daher zuverlässig ermöglicht. Der Rauheitswert (Ra) stellt den arithmetischen Mittenrauwert dar, der aus einem Oberflächenprofil, das mittels Tastschnittverfahren erfasst wurde (DIN EN ISO 4287). Vorzugsweise liegen die von der Firma Merkel Freudenberg Fluidtechnik GmbH entwickelten Merkel Counter Surface Parameter (MCP) für die Innenseite des mindestens einen Rohrelementes in den folgenden Bereichen:

| | |
|---|---|
| Rₚₖ: | 0 - 0,5µm |
| Rₚₖₓ: | 0 - 0,5µm |
| Rₖ: | 0,25 - 0,7 µm |
| Rᵥₖ: | 0,20 - 0,65 µm |
| Rᵥₖₓ: | 0,20 - 2,00µm |

Hierbei bezeichnen Rₚₖ und Rₚₖₓ Werte, die die Profilspitzen und damit die Abrasivität bezeichnen. Die Kernrautiefe Rₖ kennzeichnet das Langzeitverhalten. Die Oberflächenvertiefungen kennzeichnen die Abrasivität durch Riefen beziehungsweise beschreiben Öl-Depots und werden durch die Parameter der reduzierten Riefentiefe Rᵥₖ, Rᵥₖₓ ausgedrückt. Diese Werte werden bestimmt, indem aus dem Oberflächenprofil die Materialanteilskurve (Abbot-Firestone-Kurve) abgeleitet wird, in der die Profilhöhe über dem Materialanteil aufgetragen ist (DIN EN ISO 13565-1 und -2).

Die Innenseite des mindestens einen Rohrelementes kann beispielsweise durch Schälen und Glattwalzen und/oder Honen bearbeitet sein. Durch diese Arten der spanenden Bearbeitung kann die Oberfläche an der Innenseite des Rohrelementes mit den gewünschten Eigenschaften erzeugt werden. Erstaunlicherweise hat sich herausgestellt, dass diese Art der Bearbeitung auch an einem Rohr, das aus Hochmanganstahl besteht, möglich ist.

Gemäß einer bevorzugten Ausführungsform liegt die Innentoleranz des mindestens einen Rohrelementes im Bereich der ISO 286 Teil 2 H8 oder H9.

Gemäß einer Ausführungsform weist das Rohrelement eine Wanddicke im Bereich von 4 bis 20mm, bevorzugt 6 bis 15mm auf. Solche geringen Wanddicken können bei dem erfindungsgemäßen Kolbenzylindersystem eingesetzt werden, da durch den Hochmanganstahl eine hohe Festigkeit und Druckbeständigkeit bereitgestellt wird. Somit kann auch bei geringen Wandstärken ein zuverlässiges Betreiben des Kolbenzylindersystems gewährleistet werden und eine Beschädigung des Rohrelementes im Betrieb ist nicht zu befürchten. Alternativ kann die Wanddicke aber auch größer gewählt sein und diese kann dann das Anlegen eines höheren Innendrucks erlauben.

Gemäß einer Ausführungsform stellt das Kolbenzylindersystem ein Antriebssystem, insbesondere ein Hydraulik- oder Pneumatiksystem, eines Arbeitsgerätes dar. Alternativ kann das Kolbenzylindersystem aber auch ein Dämpfersystem eines Arbeitsgerätes darstellen. Insbesondere kann das Kolbenzylindersystem einen linear geführten Aktuator eines Arbeitsgerätes darstellen. Die vorliegende Erfindung kann beispielsweise bei Arbeitsgeräten, wie Bau- und/oder Landmaschinen oder Nutzfahrzeugen eingesetzt werden.

Gemäß einer bevorzugten Ausführungsform besteht das mindestens eine Rohrelement aus einem Material mit austenitischer Gefügestruktur. Diese Gefügestruktur kann beispielsweise durch einen Mangangehalt von mehr als 14 Gew.-% in dem Stahl und einer weiteren Zugabe von Kohlenstoff erzielt werden.

Erfindungsgemäß ist es auch möglich als Material für das mindestens eine Rohrelement einen Hochmanganstahl mit einem Mangan-Gehalte von mindestens 18 Gew.-% zu verwenden. Ein Vorteil dieses hohen Mangangehaltes liegt darin, dass zur Herstellung des Rohrelementes ein Rohr starken Kaltverformungen unterzogen werden kann und das Rohrelement dennoch nicht magnetisierbar ist. Somit kann eine Remanenz in dem Rohrelement, die zu Messungenauigkeiten bei einer magnetinduktiven Messung führen würde, verhindert werden. Zudem kann insbesondere bei einem solch hohen Mangangehalt die Kaltzähigkeit des Rohrelementes verbessert werden und das Kolbenzylindersystem kann daher auch bei tiefen Temperaturen, beispielsweise bei arktischen Verhältnissen eingesetzt werden. Zudem kann davon ausgegangen werden, dass durch einen solchen hohen Mangangehalt Stickstoff in Lösung gehalten werden kann und dadurch Austenit in dem Stahl stabilisiert wird.

Der Vorteil eines austenitischen Gefüges liegt insbesondere darin, dass aufgrund des flächenzentrierten Gitters, das Rohrelement, das aus einem Material besteht, das ein solches Gefüge aufweist, nicht ferromagnetisch wirkt.

Der Stahl, aus dem das mindestens eine Rohrelement besteht, kann vorzugsweise einen Kohlenstoffgehalt von <0,78 Gew.-% aufweisen. Durch einen solch geringen Kohlenstoffgehalt wird verhindert, dass der Stahl beim Schweißen zu spröde und/oder hart wird. Vorzugsweise weist der Stahl aber mindestens 0,03 Gew.-% auf. Hierdurch kann der TRIP-Effekt in dem Stahl, das heißt die TRIP-Eigenschaft des Stahls noch genutzt werden.

Zudem weist der Stahl, aus dem das mindestens eine Rohrelement besteht, beispielsweise maximal 5% Gew.-% Chrom, vorzugsweise maximal 2 Gew.-% Chrom auf. Durch die Zugabe von Chrom in diesen Mengen kann eine Verzunderung des Rohrelementes durch Bildung einer Passivierungsschicht verhindert werden.

Zusätzlich weist der Stahl vorzugsweise Aluminium auf, um die Neigung zur Wasserstoffversprödung zu reduzieren. Aluminium wird aber vorzugsweise in einer Menge von maximal 5 Gew.-% zugegeben. Bei einem höheren Aluminiumgehalt kann Aluminium über eine Nitrid-Abbindung hinaus vorhanden bleiben, was bei der Stahlherstellung störend ist.

Weitere optionale Legierungselemente, die in dem Stahl vorhanden sein können, sind Nb, Ti, und/oder V. Diese Legierungselemente werden, sofern sie zugegeben werden, vorzugsweise in Mengen zugegeben, deren Summe maximal 0,2 Gew.-% beträgt. Hierdurch kann die Kornfeinung in dem Gefüge unterstützt werden, da die Karbide und/oder Nitride dieser Legierungselemente das Kornwachstum begrenzen.

Der Vanadiumgehalt beträgt vorzugsweise maximal 0,2 Gew.-%. Hierdurch werden Karbiden oder Nitriden gebildet.

Der Niobgehalt beträgt vorzugsweise maximal 0,2 Gew.-%. Hierdurch werden Karbonitride gebildet, wodurch der Stickstoff abgebunden wird.

Der Titangehalt beträgt vorzugsweise maximal 0,1 Gew.-%. Hierdurch werden Nitride gebildet, wodurch der Stickstoff abgebunden wird.

Ein Stahl, der für das mindestens eine Rohrelement des Kolbenzylindersystems verwendet werden kann, kann insbesondere die folgenden Legierungselemente in Gew.-% aufweisen, wobei der Rest Eisen und unvermeidbare Verunreinigungen sind:

| | |
|---|---|
| C: | 0,03 - 0,78 |
| Si: | 0,03 - 5 |
| Mn: | 14 - 40 |
| S: | ≤ 0,03 |
| P: | ≤ 0,03 |
| Al: | 0,03 - 5 |
| N: | <0,1 |
| Cr: | < 5 |
| Mo: | <2,5 |
| Cu: | < 2,5 |
| V: | < 0,5 |

Ein Beispiel einer Analyse eines Stahls, der für das mindestens eine Rohrelement des Kolbenzylindersystems verwendet werden kann, ist in der folgenden Tabelle angegeben. Die Gehalte der Legierungselemente sind in Gew.-% angegeben, wobei der Rest Eisen und unvermeidbare Verunreinigungen ist.

| C | Si | Mn | S | P | Al | N | Cr | Mo | Cu | V |
|---|---|---|---|---|---|---|---|---|---|---|
| 0,1 - 0,5 | 0,1 - 3 | 15-30 | < 0,001 | ≤ 0,03 | 0,5 - 3 | <0,04 | 0,1 - 4 | < 1,5 | < 1 | < 0,25 |

Gemäß einer Ausführungsform weist das mindestens eine Rohrelement an der Innenseite eine randentkohlte Zone mit um 5 bis 10 Prozent reduziertem Kohlenstoffgehalt auf. Vorzugsweise reicht die randentkohlte Zone bis in eine Tiefe von 10 bis 150 µm von der inneren Oberfläche.

Durch die randentkohlte Zone wird beim Kaltziehen ein TRIP-Effekt durch Umwandlung metastabilen Austenits in Martensit in der randentkohlten Zone bewirkt. Damit wird der Vorteil erreicht, dass das Rohrelement einfacher spanend bearbeitbar und gleichzeitig weniger verschleißanfällig ist und weniger verschleißend auf Gleitdichtungselemente wird. Es wird insbesondere eine gezielte Verfestigung beziehungsweise Härtesteigerung an der Innenseite des Zylinders erzielt. Alternativ oder zusätzlich kann auch die Außenseite des Kolbens eine randentkohlte Zone aufweisen und dort die gleichen Vorteile hervorrufen.

Gemäß einer Ausführungsform weist die randentkohlte Zone wenigstens teilweise eine martensitische Gefügestruktur auf. Die Härte HV (Vikershärte) in der randentkohlten Zone ist dabei vorzugsweise größer 400. Es hat sich überraschenderweise gezeigt, dass eine derart ausgebildetes Rohrelement mit einer solch dünnen randentkohlten Zone trotz darin enthaltener martensitischer Gefügestruktur die erfindungsgemäßen guten Eigenschaften im Hinblick auf die Magnetisierbarkeit beibehält.

Die randentkohle Zone kann durch Glühbehandlung während der Formgebung beziehungsweise zwischen Formgebungsschritten des Rohrelements unter oxidierender Atmosphäre erzeugt werden. Hierbei können die Glühtemperatur und Glühdauer sowie weitere Parameter, wie die Gaszusammensetzung in der Atmosphäre gezielt eingestellt werden, um die Tiefe und die Eigenschaften des Gefüges in der randentkohlten Zone beeinflussen zu können.
Gemäß einer bevorzugten Ausführungsform umfasst das Kolbenzylindersystem eine Messvorrichtung, insbesondere eine magnetinduktive Messvorrichtung. Die Messvorrichtung weist vorzugsweise zumindest einen Sensor an der Außenseite des Rohrelementes und mindestens einen Magneten an dem Kolben auf. Vorzugsweise sind mehrere Sensoren in einer Sensoranordnung an der Außenseite des Rohrelementes vorgesehen. Diese Ausführungsform der Messvorrichtung als magnetinduktive Messvorrichtung ist bei der vorliegenden Erfindung besonders vorteilhaft, da aufgrund des Hochmanganstahls, der als Material für das mindestens eine Rohrelement verwendet wird, eine Restmagnetisierung verhindert werden kann und daher mit der Messvorrichtung besonders zuverlässige Messergebnisse erzielt werden können. Die Messvorrichtung kann auch als Sensorik bezeichnet werden und kann außer dem oder den Magneten und dem oder den Sensoren auch eine Steuerung und gegebenenfalls eine Verarbeitungseinheit zum Verarbeiten der Sensorsignale umfassen.

Es liegt aber auch im Rahmen der vorliegenden Erfindung, dass die Messvorrichtung zumindest einen Magneten und zumindest einen Sensor aufweist, wobei der mindestens eine Magnet an der Außenseite des Rohrelementes angeordnet ist und der mindestens eine Sensor im Inneren des Rohrelementes, beispielsweise an dem Kolben oder an einer Kolbenstange des Kolbens vorgesehen ist. Vorzugsweise sind auch bei dieser Ausführungsform mehrere Sensoren in einer Sensoranordnung im Inneren des Rohrelementes vorgesehen. Die Messvorrichtung kann auch als Sensorik bezeichnet werden und kann außer dem oder den Magneten und dem oder den Sensoren auch eine Steuerung und gegebenenfalls eine Verarbeitungseinheit zum Verarbeiten der Sensorsignale umfassen.

Gemäß einer Ausführungsform umfasst das Kolbenzylindersystem mindestens zwei Rohrelemente. Die Rohrelemente können hierbei unterschiedliche Durchmesser aufweisen und insbesondere ineinander geführt sein. Somit bilden die Rohrelemente bei dieser Ausführungsform einen Teleskopzylinder. In diesem und insbesondere in dem Rohrelemente mit geringstem Durchmesser kann der Kolben des Kolbenzylindersystems geführt sein.

Das mindestens eine Rohrelement des Kolbenzylindersystems wird vorzugsweise an dessen Außenseite verzinkt und/oder lackiert. Die Innenseite des Rohrelementes ist vorzugsweise unbeschichtet, da diese Seite in der Regel beim Einsatz mit Öl in Kontakt kommt. In einzelnen Fällen kann das Rohrelement aber auch innen beschichtet oder verchromt sein. Im Falle des Auftrags einer Zinkschicht besteht im Vergleich zu Vergütungsstählen keinerlei Gefahr von wasserstoffinduzierter Spannungsrisskorrosion beziehungsweise Wasserstoffversprödung.

Gemäß einer Ausführungsform weist das mindestens eine Rohrelement des Kolbenzylindersystems an dessen Außenseite eine Zinkschicht auf. Trotz hoher Festigkeit der verwendeten Legierung besteht keine Gefahr der Wasserstoffversprödung aufgrund in der austenitischen Gefügestruktur des Rohrelements.

Das Rohrelement des erfindungsgemäßen Systems kann auf unterschiedliche Art hergestellt werden. Insbesondere kann das Rohrelement aus einem Nahtlosrohr hergestellt werden. Die entsprechende Herstellungsroute umfasst dabei vorzugsweise die folgenden Schritte:
→ Herstellung eines Warmrohr durch Lochen und Warmwalzen eines Blocks
→ gegebenenfalls Wärmebehandlung des Warmrohres
→ Kaltziehen des Warmrohres
→ Wärmebehandlung und Richten des kaltgezogenen Rohres
→ Innenbearbeitung des Rohres durch Schälen und Glattwalzen oder eventuell Honen
→ Ablängen des Rohres auf eine Fixlänge
→ Zerspanung, insbesondere von Anbindungsflächen
→ Montage Kolben und Sensorik
→ Verschrauben oder Verschweißen des abgelängten Rohrelementes mit Boden und Deckel
→ gegebenenfalls Lackieren des Rohrelementes

Weiterhin kann das Rohrelement aus einem geschweißten Rohr hergestellt werden. Die entsprechende Herstellungsroute umfasst dabei vorzugsweise die folgenden Schritte:
→ Bereitstellen eines Coils
→ Rollformen und Schweißen, insbesondere Hochfrequenzschweißen
→ Kaltziehen des geschweißten Rohres
→ Wärmebehandlung und Richten des kaltgezogenen Rohres
→ Innenbearbeitung des Rohres durch Schälen, Glattwalzen oder gegebenenfalls Honen
→ Ablängen des Rohres auf eine Fixlänge
→ Zerspanung, insbesondere von Anbindungsflächen
→ Montage Kolben und Sensorik
→ Verschrauben oder Verschweißen des abgelängten Rohres mit Boden und Deckel
→ gegebenenfalls Lackieren des Rohrelementes.

Der Boden und Deckel können auch als Verschlussplatten bezeichnet werden. Diese werden an den Enden des Rohrelementes angeschweißt oder es wird spanend ein Gewinde eingebracht und die Verschlussplatte dann stirnseitig eingeschraubt.

Die Erfindung wird im Folgenden erneut unter Bezugnahme auf die beiliegenden Figuren beschrieben. Es zeigen:
Figur 1: eine Ausführungsform eines Kolbenzylindersystems gemäß der vorliegenden Erfindung, und
Figur 2: eine zweite Ausführungsform eines Kolbenzylindersystems gemäß der vorliegenden Erfindung.

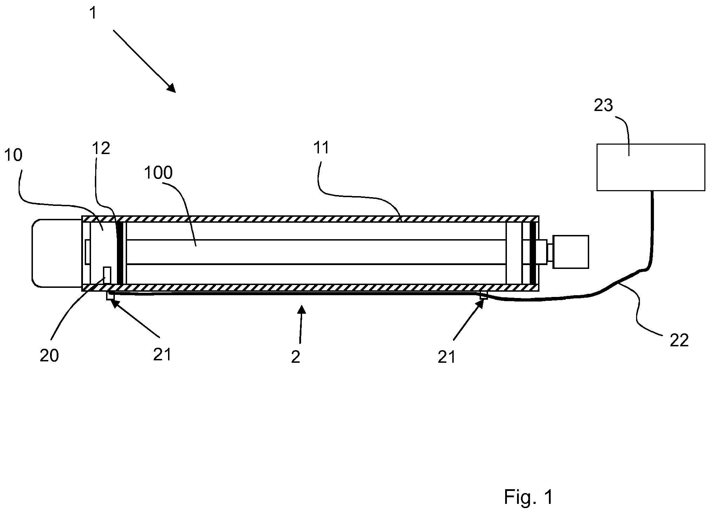

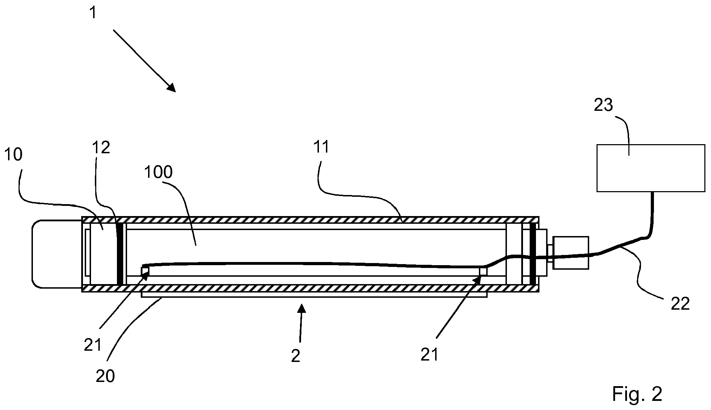

Bei den in den Figuren 1 und 2 gezeigten Ausführungsformen des Kolbenzylindersystems 1 handelt es sich jeweils um ein Kolbenzylindersystem 1 mit einer Messvorrichtung 2.

In der Ausführungsform nach Figur 1 umfasst das Kolbenzylindersystem 1 einen Kolben 10 und ein Rohrelement 11, das als Zylinder des Kolbenzylindersystems 1 dient. An der Außenseite des Kolbens 10 ist ein Magnet 20 der Messvorrichtung 2 eingebracht. An der Außenseite des Rohrelementes 11 sind Sensoren 21 der Messvorrichtung 2 aufgebracht. Die Sensoren 21 sind über eine Leitung 22 mit einer Steuerung 23 der Messvorrichtung 2 verbunden. An dem Kolben 10 sind in der dargestellten Ausführungsform Dichtungen 12 vorgesehen.

Das Rohrelement 11 besteht in der dargestellten Ausführungsform aus Hochmanganstahl. Hierdurch kann bei einer Messung der Position des Kolbens 10 in dem Rohrelement 11 ein zuverlässiges Messergebnis erzielt werden. Insbesondere ist keine Restmagnetisierung des Rohrelementes 11 zu befürchten, die zu einer Messungenauigkeit führen würde.

In der Figur 2 ist eine weitere Ausführungsform des Kolbenzylindersystems 1 gezeigt. Diese Ausführungsform unterscheidet sich von der ersten Ausführungsform aus Figur 1 lediglich dadurch, dass bei dieser Ausführungsform die Sensoren 21 im Inneren des Rohrelementes 11 angeordnet sind und an der Außenseite des Rohrelementes 11 Magneten 20 vorgesehen sind.

Es hat sich erstaunlicher Weise gezeigt, dass sich Rohrelemente zur Verwendung in Kolbenzylindersystemen aus Hochmanganstahl herstellen lassen und damit die Vorteile des Hochmanganstahls in vorteilhafter Weise genutzt werden können. Gemäß einer Ausführungsform betrifft die Erfindung ein Antriebskolben-Zylinder-System mit einem nichtmagnetisierbaren, nichtmagnetischen Zylinder. Dieses System kann zusätzlich eine Messvorrichtung zur Positionsbestimmung des Kolbens umfassen. Die vorliegende Erfindung kann beispielsweise bei Arbeitsgeräten, wie Bau- und/oder Landmaschinen oder Nutzfahrzeugen eingesetzt werden. Somit kann die Erfindung an mobilen oder stationären Arbeitsgeräte eingesetzt werden, beispielsweise kann die Erfindung bei Pressen eingesetzt werden. Die Arbeitssicherheit des Arbeitsgerätes kann durch die Erfindung erhöht werden.

Das erfindungsgemäß als Zylinder des Kolbenzylindersystems verwendete Rohrelement, das auch als Zylinderrohr bezeichnet werden kann, ist innen spanenden bearbeitet worden und liegt beispielsweise als innen geschältes und glattgewalzte Zylinderrohr vor. Es hat sich gezeigt, dass mit der vorliegenden Erfindung auch Ra-Werte von kleiner / gleich 0,2µm erzielt werden können.

Ein Vorteil der vorliegenden Erfindung besteht darin, dass durch den Einsatz von Hochmanganstahlrohren ein deutlich besseres und schnelleres Messergebnis erreicht werden kann. Die Vorteile der Verwendung von Hochmanganstahl sind durch den austenitischen Gefügezustand bedingt, der verhindert, dass das Zylinderrohr magnetisiert wird. Zudem können bei der Verwendung von Hochmanganstahl Wanddickenreduzierungen und damit Gewichtseinsparungen am Zylinder realisieren, die insbesondere durch die höheren Festigkeitseigenschaften bedingt sind.

Bei der vorliegenden Erfindung können geschweißte oder nahtlos kaltgezogene Präzisionsrohre aus Hochmanganstahl verwendet werden. Diese können zu Rohrelementen, die auch als Zylindermänteln bezeichnet werden können eines Kolben- Zylinder-Systems verarbeitet werden. Die Rohre werden an ihren Innenoberflächen zerspanend bearbeitet und können dann zugeschnitten werden und mit Zylinderboden und Zylinderdeckel verschweißt oder verschraubt werden. Der Zuschnitt kann aber auch vor dem Zerspanen der Innenoberfläche erfolgen. Die Erfindung kann bei aktiven Systemen, beispielsweise bei Systemen mit Hydraulik- oder Pneumatikzylinder, eingesetzt werden oder aber bei aktiven oder passiven Dämpfersystemen. Das Kolbenzylindersystem kann auch als Aktuatoren bezeichnet werden.

### Bezugszeichenliste

- 1: Kolbenzylindersystem
- 10: Kolben
- 100: Kolbenstange
- 11: Rohrelement (Zylinder)
- 12: Dichtung

- 2: Messvorrichtung
- 20: Magnet(en)
- 21: Sensor(en)
- 22: Leitung
- 23: Steuerung

## Patentansprüche

1. Kolbenzylindersystem für ein Arbeitsgerät, wobei das Kolbenzylindersystem (1) mindestens ein Rohrelement (11) und mindestens einen in dem mindestens einen Rohrelement (11) geführten Kolben (10) umfasst, **dadurch gekennzeichnet, dass** das mindestens eine Rohrelement (11) aus einem Hochmanganstahl besteht und die Innenseite des mindestens einen Rohrelementes (11) spanend bearbeitet ist.

2. Kolbenzylindersystem nach Anspruch 1, **dadurch gekennzeichnet, dass** das Rohrelement (11) aus einem kaltgezogenen, nahtlosen Rohr oder einem geschweißten und kaltgezogenen Rohr besteht.

3. Kolbenzylindersystem nach einem der Ansprüche 1 oder 2, **dadurch gekennzeichnet, dass** das mindestens eine Rohrelement (11) einen Rauhigkeitswert an der Innenseite aufweist, der <= 0,4µm, vorzugsweise <= 0,3 und besonders bevorzugt <= 0,2µm beträgt.

4. Kolbenzylindersystem nach einem der Ansprüche 1 bis 3, **dadurch gekennzeichnet, dass** die Innenseite des mindestens einen Rohrelementes (11) durch Schälen und Glattwalzen und/oder Honen bearbeitet ist.

5. Kolbenzylindersystem nach einem der Ansprüche 1 bis 4, **dadurch gekennzeichnet, dass** die Innentoleranz des mindestens einen Rohrelementes (11) im Bereich der ISO 286 Teil 2 H8 oder H9 liegt.

6. Kolbenzylindersystem nach einem der Ansprüche 1 bis 5, **dadurch gekennzeichnet, dass** das Rohrelement (11) eine Wanddicke im Bereich von 4 bis 20mm aufweist.

7. Kolbenzylindersystem nach einem der Ansprüche 1 bis 6, **dadurch gekennzeichnet, dass** das Kolbenzylindersystem (1) ein Antriebssystem, insbesondere ein Hydraulik- oder Pneumatiksystem, oder ein Dämpfersystem eines Arbeitsgerätes darstellt.

8. Kolbenzylindersystem nach einem der Ansprüche 1 bis 7, **dadurch gekennzeichnet, dass** das mindestens eine Rohrelement (11) aus einem Material mit austenitischer Gefügestruktur besteht und eine Zugfestigkeit Rm von mindestens 1050MPa, bevorzugt zwischen 1100 und 1300 MPa sowie eine Streckgrenze Rp 0,2 von mindestens 1000 MPa aufweist.

9. Kolbenzylindersystem nach einem der Ansprüche 1 bis 8, **dadurch gekennzeichnet, dass** das Kolbenzylindersystem (1) eine Messvorrichtung (2) umfasst, die zumindest einen Sensor (21) an der Außenseite des Rohrelementes (11) und mindestens einen Magneten (20) an dem Kolben (10) aufweist.

10. Kolbenzylindersystem nach einem der Ansprüche 1 bis 8, **dadurch gekennzeichnet, dass** das Kolbenzylindersystem (1) eine Messvorrichtung (2) umfasst, die zumindest einen Magneten (20) und zumindest einen Sensor (21) aufweist, wobei der mindestens eine Magnet (20) an der Außenseite des Rohrelementes (11) angeordnet ist und der mindestens eine Sensor (21) im Inneren des Rohrelementes (11) vorgesehen ist.

11. Kolbenzylindersystem nach einem der Ansprüche 1 bis 10, **dadurch gekennzeichnet, dass** das Kolbenzylindersystem (1) mindestens zwei Rohrelemente (11) umfasst und die Rohrelemente (11) zusammen einen Teleskopzylinder bilden.

12. Kolbenzylindersystem nach einem der Ansprüche 1 bis 11, **dadurch gekennzeichnet, dass** das mindestens eine Rohrelement (11) an der Innenseite eine randentkohlte Zone mit um 5 bis 10 Prozent reduzierten Kohlenstoffgehalt bis in eine Tiefe von 10 bis 150 µm aufweist.

13. Kolbenzylindersystem nach Anspruch 12, **dadurch gekennzeichnet, dass** die randentkohlte Zone wenigstens teilweise eine martensitische Gefügestruktur aufweist, insbesondere beträgt die Härte HV in der randentkohlten Zone größer 400.

14. Kolbenzylindersystem nach einem der vorstehenden Ansprüche, **dadurch gekennzeichnet, dass** das Rohrelement (11) des Kolbenzylindersystems (1) an dessen Außenseite eine Zinkschicht aufweist.
